(19) Europäisches Patentamt
European Patent Office
Office européen des brevets

(11) Veröffentlichungsnummer: **0 058 384**
**B1**

(12) **EUROPÄISCHE PATENTSCHRIFT**

(45) Veröffentlichungstag der Patentschrift: **23.07.86**

(21) Anmeldenummer: **82100956.0**

(22) Anmeldetag: **10.02.82**

(51) Int. Cl.⁴: **C 08 G 8/36,** C 08 G 8/32, C 08 G 65/00, B 01 F 17/42, C 09 B 67/36 // D06P1/613

(54) **Anionische grenzflächenaktive Verbindungen auf Basis oxalkylierter Naphthol-Novolake und deren Verwendung.**

(30) Priorität: **12.02.81 DE 3104991**

(43) Veröffentlichungstag der Anmeldung: **25.08.82 Patentblatt 82/34**

(45) Bekanntmachung des Hinweises auf die Patenterteilung: **23.07.86 Patentblatt 86/30**

(84) Benannte Vertragsstaaten: **BE CH DE FR GB IT LI NL**

(56) Entgegenhaltungen:
**EP-A-0 015 557**
**CH-A-583 183**
**DE-C-1 222 258**
**DE-C-2 132 403**
**GB-A-2 041 388**

**Ullmann's Encyclopädie der technischen Chemie, 4. Auflage, Band 8, Seite 252, 1974**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Uhrig, Heinz, Feldbergstrasse 59, D-6374 Steinbach (DE)**
Erfinder: **Ehl, Klaus, Dr., Geisenheimer Strasse 92, D-6000 Frankfurt am Main 71 (DE)**

**EP 0 058 384 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft grenzflächenaktive Verbindungen, die insbesondere als Kuppelhilfsmittel für die Herstellung von Azopigmenten sowie als Dispergiermittel bei der Herstellung von Farbmitteldispersionen oder als Netz-, Emulgier-, Egalisier- und Färbereihilfsmittel eingesetzt werden können.

Aus der DE-C-1 222 258 ist bereits ein Verfahren zur Herstellung von Polyaddukten aus Formaldehyd und oxethyliertem Naphthol oder oxethyliertem Chlornaphthol bekannt. Die Polyaddukte sind schaumarme Dispergiermittel zur Herstelung wäßriger Dispersionen von Pigmenten und Farbstoffen. Die oberflächenaktiven Eigenschaften dieser Verbindungen werden jedoch vielfach als nicht ausreichend angesehen.

Aus der CH-A5-583 183 ist ein Verfahren zur Herstellung von Sulfobernsteinsäurehalbestern von oxalkylierten Alkylphenol-Novolaken bekannt. Die Produkte und deren Salze sind als Dispergiermittel für wasserunlösliche organische Substanzen (speziell Biozide) geeignet. Die DE-C3-2 132 403 beschreibt die Verwendung dieser Dispergiermittel zur Herstellung von Farbstoff- und Pigmentdispersionen.

Aus der EP-A-0 015 557 ist bekannt, stabile wäßrige Dispersionen aromatischer Amine, die zur Erzeugung wasserunlöslicher Azofarbstoffe auf der Faser nach der Eisfarbentechnik eingesetzt werden können, mit Hilfe von Gemischen anionischer und nichtionischer Tenside herzustellen. Als nichtionische Tenside werden dabei Verbindungen mit oxalkylierten hydroxy- und/oder carboxyhaltigen aromatischen Resten verwendet, die endständig auch verethert sein können. Als anionische Tenside werden bevorzugt bestimmte Ligninsulfonate, sulfogruppenhaltige Phenol-, Naphthol- oder Kresol-Formaldehyd-Addukte eingesetzt. Die Verwendung dieser Tensidgemische zum Dispergieren wasserunlöslicher Farbstoffe oder Pigmente sowie als Kuppelhilfsmittel zur Herstellung von Azofarbstoffen wird nicht erwähnt und ist mit Nachteilen verbunden.

Gegenüber den obengenannten bekannten Verbindungen weisen die erfindungsgemäßen Verbindungen verbesserte oberflächenaktive Eigenschaften auf.

Gegenstand der Erfindung sind Verbindungen der allgemeinen Formel I

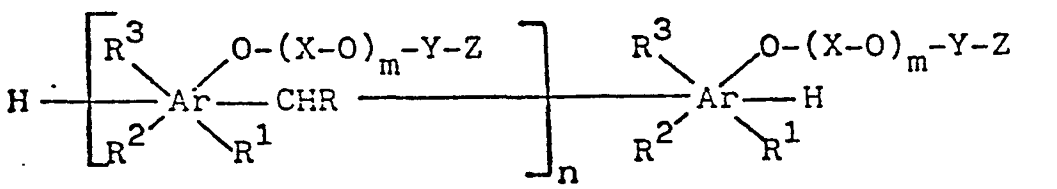

(I)

in der
Ar Naphthalin,
X $-CH_2-CH_2-$ und/oder $-CH_2-CH(CH_3)-$,
Y gleiche oder verschiedene Reste der Formeln $-CH_2-CH_2-$, $-CH_2-CH(CH_3)-$ und $-CH_2-CHOH-CH_2-$,
Z gleiche oder verschiedene Reste der Formeln $-OH$, $-O-CO-CH=CH-COOM$, $-O-CO-CH_2-CH(SO_3M)-COOM$,

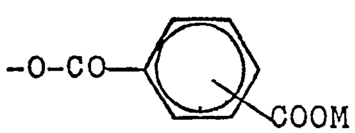

und $-SO_3M$,

wobei M für ein Kation steht, mit der Maßgabe, daß mindestens ein Rest Z von OH verschieden ist,
$R^1$, $R^2$ und $R^3$ Wasserstoff oder Alkyl mit 1 bis l4 C-Atomen, wobei mindestens einer der Reste $R^1$,$R^2$ und $R^3$ Alkyl sein muß,
R Wasserstoff oder Alkyl mit 1 bis 9 C-Atomen,
m eine Zahl von 1 bis 150 und
n eine Zahl von 1 bis 9 bedeuten.

Bevorzugt sind Verbindungen der Formel I in denen
X $-CH_2-CH_2-$,
Y $-CH_2-CH_2-$ oder $-CH_2-CHOH-CH_2-$,
Z $-O-CO-CH_2-CH(SO_3M)-COOM$,

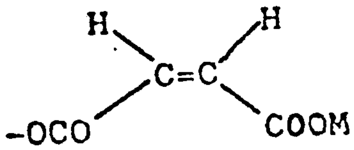 oder 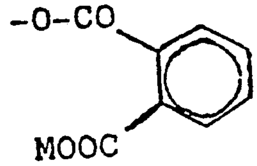

$R^1$ Alkyl mit 1 bis 12 C-Atomen,
$R^2$ und $R^3$ Wasserstoff,
R Wasserstoff oder Alkyl mit 1 bis 4 C-Atomen,
m eine Zahl von 2 bis 25,
n eine Zahl von 2 bis 6 und
M Wasserstoff, ein Alkalimetall, ein äquivalent Erdalkalimetall oder eine Ammoniumgruppe, die durch niederes Alkyl substituiert sein kann, sowie eine aus Ammoniak oder solchen niederen Alkylaminen durch Anlagerung von bis zu 100 Ethylenoxid- und/oder Propylenoxideinheiten erhaltene Ammoniumgruppe bedeuten.

Besonders bevorzugt sind Verbindungen der Formel I, in denen
Z $-O-CO-CH_2-CH(SO_3Na)-COONa$,
$R^1$ Methyl oder Alkyl mit 6 bis 12 C-Atomen,
R Wasserstoff und
m eine Zahl von 8 bis 20 bedeuten.

Die Erfindung betrifft weiterhin die Verwendung der Verbindungen der Formel I als grenzflächenaktive Mittel, insbesondere als Kuppelhilfsmittel für die Herstellung von Azopigmenten sowie als Dispergiermittel bei der Herstellung von Farbmitteldispersionen, vorzugsweise von Dispersionsfarbstoffen und Pigmenten, und weiterhin als Netz-, Emulgier-, Egalisier- und Färbereihilfsmittel.

Im folgenden wird die Herstellung der Verbindungen der Formel I erläutert, wobei die Reste und Indizes die vorstehend genannten Bedeutungen haben:

Durch Kondensation von (n + 1) Mol eines oder mehrerer Naphthole der Formel II

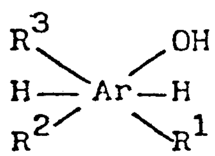 (II)

mit n Mol eines oder mehrerer Alkanale der Formel III
R-CHO (III)
werden Kondensationsprodukte erhalten, die im wesentlichen der Formel IV

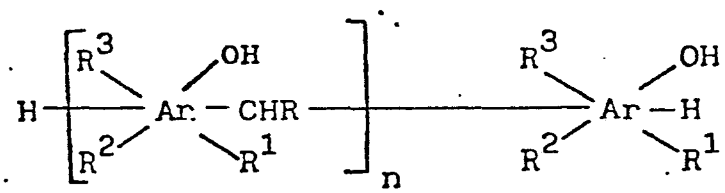 (IV)

entsprechen. Diese Kondensationsprodukte werden im folgenden als "Novolake" bezeichnet, wobei es sich auch beim Einsatz von nur einem Naphtol und nur einem Aldehyd um Gemische von Kondensationsprodukten handelt, d. h. in der Formel IV entspricht n nur für das Hauptprodukt der Anzahl der eingesetzten Mol Alkanal der Formel III, und Kondensationsprodukte mit niedrigeren und höheren Werten für n liegen als Nebenprodukte vor.

Die Novolake der Formel IV werden mit Ethylenoxid und/oder Propylenoxid umgesetzt, wobei Verbindungen der Formel I erhalten werden, in denen Y die Bedeutung von X hat und Z OH bedeutet. Solche Verbindungen können in untergeordneter Menge in den erfindungsgemäßen Verbindungen enthalten sein.

Zur Einführung der anionischen Funktion Z kommen mehrere Verfahren in Betracht:

Die endständigen Hydroxygruppen an den Oxalkylatketten können mehr oder weniger vollständig durch Azylierung mit 1,2-Ethylendicarbonsäuren oder Benzoldicarbonsäuren bzw. den entsprechenden azylierenden Derivaten, beispielsweise den Anhydriden, in die entsprechenden Halbester übergeführt werden. Bevorzugte Acylierungsmittel sind Phthalsäureanhydrid und insbesondere Maleinsäureanhydrid.

Bei der Acylierung mit 1,2-Ethylendicarbonsäuren bzw. ihren Derivaten, insbesondere mit Maleinanhydrid, können die erhaltenen Produkte als Ausgangsmaterialien zur Herstellung der entsprechenden Sulfobernsteinsäureester verwendet werden, indem an diese Produkte Sulfite angelagert werden.

Zur Einführung der Sulfogruppe bestehen ebenfalls mehrere Möglichkeiten:

Die terminalen Hydroxygruppen der Oxalkylatketten können ganz oder teilweise in reaktionsfähigere Substituenten übergeführt werden,beispielsweise in Halogenatome durch Einwirkung entsprechender Halogenierungsmittel wie Thionylchlorid. Weiterhin ist es möglich, die Oxalkylate mit Epichlorhydrin umzusetzen, wobei Zwischenprodukte zur Herstellung von Verbindungen der Formel I erhalten werden, in denen Y die Bedeutung $-CH_2-CHOH-CH_2-$ hat.

Diese reaktionsfähigen Zwischenprodukte können dann mit Sulfit zu den entsprechenden Sulfoverbindungen umgesetzt werden.

Im folgenden werden besonders bevorzugte Ausgestaltungen der Erfindung näher erläutert, wobei sich Prozentangaben auf das Gewicht beziehen, sofern nichts anderes angegeben ist.

Als Ausgangsprodukte zur Bildung der Novolake eignen sich bevorzugt Alkylnaphthole auf Basis von β-Naphthol, wie beispielsweise Methyl-, Butyl-, Octyl-, Nonyl-, Decyl-, Dodecyl-, Tetradecyl-, Dibutyl-, Dioctyl-, Dinonyl-, Didecyl-, Didodecyl- Ditetradecyl- oder Tributylnaphthol sowie deren Mischungen wobei die Alkylreste geradkettig oder verzweigt sein können. Bevorzugt sind die Monoalkylnaphthole.

Bei den Alkanalen können folgende Beispiele angeführt werden:

Formaldehyd, Acetaldehyd, Propionaldehyd und Butyraldehyd, sowie solche Alkanale bildende Verbindungen wie Paraformaldehyd, Trioxan, Tetraoxamethylen und Paraldehyd.

Für die Herstellung der Novolake werden bevorzugt Monoalkylnaphthole mit Formaldehyd im Molverhältnis 2:1 bis 10:6, vor allem 3:2 bis 7:6, nach an sich bekannten Verfahren (z. B. Hultzsch,"Chemie der Phenolharze" (1950), S. 114) in Gegenwart von sauren Katalysatoren kondensiert. Bei der Umsetzung kann der Formaldehyd als wäßrige Lösung oder als Paraformaldehyd eingesetzt werden, wobei gegebenenfalls ein Überschuß von 5 - 10 Mol-Prozent zur Anwendung kommt. Als saure Katalysatoren können Mineralsäuren wie Schwefelsäure oder Phosphorsäure sowie Sulfonsäuren wie Dodecylbenzolsulfosäure oder wegen ihrer leichten Entfernbarkeit bei der Abdestillation des Wassers bevorzugt Salzsäure verwendet werden. Die Säuren werden im allgemeinen in einer Konzentration von 0,1 bis 5 %, bezogen auf Alkylnaphthol, angewendet. Das nach einer Reaktionszeit von 3 bis 20 Stunden gebildete Reaktionswasser wird bis zu einem Wassergehalt im Novolakharz von weniger als 0,5 % abdestilliert. Hierbei wird zuletzt unter vermindertem Druck von weniger als etwa 65 mbar gearbeitet.

Die erhaltenen Novolake sind mehr oder weniger zähflüssige bis wachsartige bzw. spröde, klare hell- bis dunkelbraun gefärbte Harze. Ihre Zusammensetzung ist vor allem von dem Verhältnis Alkylnaphthol zu Formaldehyd abhängig, und sie besitzen ein mittleres Molekulargewicht zwischen 500 und 6000.

Die Oxalkylierung der Novolake erfolgt nach bekannten Methoden, vorzugsweise mit Alkalihydroxiden oder -alkoxiden als Katalysator bei 100 bis 200° C, bevorzugt bei 140 bis 180° C.

Die Menge Ethylenoxid und/oder Propylenoxid wird so bemessen, daß eine stabile Emulsion bzw. eine völlige Löslichkeit der Novolak-Oxalkylate in Wasser erreicht wird, d. h. die Menge des angelagerten Alkylenoxids bemißt sich nach dem angestrebten Grad der Hydrophilie. Bevorzugt werden an jede Hydroxygruppe der Novolakharze 1 bis 150, vorzugsweise 2 bis 25, insbesondere 8 bis 20 Mol Ethylenoxid und/ oder Propylenoxid angelagert. Sofern sowohl Ethylenoxid als auch Propylenoxid eingesetzt werden, können diese getrennt, also absatzweise, oder als Gemisch angewendet werden.

Als Alkalihydroxid eignen sich Kaliumhydroxid oder bevorzugt Natriumhydroxid, als Alkalialkoxid Natriummethylat oder -ethylat; die Konzentration ist bevorzugt 0,05 bis 1.0 %, bezogen auf den Novolak. Die Oxalkylierung kann drucklos oder in Druckgefäßen durchgeführt werden, wobei das Alkylenoxid gasförmig oder flüssig zugeführt werden kann. Der Arbeitsdruck beträgt 1 bis 10, vorzugsweise 2 bis 4 bar.

Als Vertreter der Dicarbonsäuren bzw. der entsprechenden Anhydride zur Acylierung der Oxalkylate seien genannt: Maleinsäure, Fumarsäure, Maleinsäureanhydrid, Phthalsäure, Terephthalsäure und Phthalsäureanhydrid.

Die Reaktion der Novolake mit Maleinsäureanhydrid oder Phthalsäureanhydrid zu den Maleinsäurehalbestern bzw. Phthalsäurehalbestern erfolgt durch Mischen der Komponenten und Verrühren bei 20 bis 100° C, bevorzugt 40 bis 80° C, in Anwesenheit von Alkalihydroxiden, deren Konzentration 0,1 bis 1,0 %, bezogen auf die Gesamtmischung, beträgt. Da Maleinsäureanhydrid zur Sublimation neigt, ist es vorteilhaft, in Druckgefäßen mit einem Überdruck von 0,2 - 1,0 bar Stickstoff oder Luft zu arbeiten und für kräftige Durchmischung zu sorgen, da zu Beginn der Reaktion das geschmolzene Maleinsäureanhydrid mit den Oxalkylaten schlecht mischbar ist. Die Menge des Maleinsäureanhydrids bzw. Phthalsäureanhydrids wird vorzugsweise so bemessen, daß alle Oxalkylat-Hydroxy-Endgruppen umgesetzt werden.

Die Überführung der Maleinsäurehalbester-Verbindungen in die entsprechenden Sulfobernsteinsäurehalbester erfolgt nach Zugabe von wäßrigen Lösungen von Sulfiten oder Hydro-. gensulfiten. Auf jede Maleinsäurehalbestergruppe werden 1,0 bis 1,5, bevorzugt 1,0 - 1,1 Mol schwefelige Säure in Form von Alkali- oder Erdalkalisulfiten oder -hydrogensulfiten bzw. -pyrosulfiten eingesetzt.

Während sich die Sulfite besonders zur Bildung der Dialkalisalze der Sulfobernsteinsäurehalbester eignen, ist es bei der Anlagerung von Hydrogensulfiten möglich, durch Neutralisation mit Basen wie Ammoniak, niedermolekularen Alkylaminen oder Alkylolaminen bzw. deren Alkylenoxidaddukten, wobei an 1 Mol Ammoniak bzw. Amin 1 bis 100, vorzugsweise 5 bis 30 Mol Propylenoxid und/oder bevorzugt Ethylenoxid angelagert sind, den Grad der Hydrophilie zusätzlich zu beeinflussen. Als "nieder"-molekular gelten Reste mit bis zu 4 C-Atomen.

Als Vertreter der niedermolekularen Alkylamine oder Alkylolamine seien genannt: Ethylamin, n-Propylamin, iso-Propylamin, n-Butylamin, iso-Butylamin, Monoethanolamin, Mono-n-propanolamin, Mono-iso-propanolamin, Mono-n-butanolamin, Mono-iso-butanolamin, Di-ethanolamin, Di-n-propanolamin, Di-n-butanolamin, Triethanolamin, Tripropanolamin oder Tributanolamin sowie Di- und Polyamine wie Ethylendiamin,

Diethylentriamin, Triethylentetramin, Propylendiamin, Dipropylentriamin oder Tripropylentetramin. Die zugesetzte Wassermenge kann 50 bis 85 %, bezogen auf die gesamte Lösung bzw. Mischung, betragen und ist abhängig von der Löslichkeit der Sulfobernsteinsäurehalbestersalze und der Viskosität der Lösungen. Die Reaktionstemperaturen betragen 20 bis 100° C, bevorzugt 40 bis 80° C.

Für die Herstellung der sulfogruppenhaltigen Produkte werden am Ende der Ethylenoxid- und/oder Ethylenoxid/Propylenoxidkette(n) die reaktionsfähigen Gruppen, bevorzugt Chloratome, beispielsweise durch Anlagerung von Epichlorhydrin an die endständige(n) Hydroxygruppe(n) bei Temperaturen zwischen 20 und 100° C, vorzugsweise zwischen 40 bis 90° C, in Gegenwart von Katalysatoren wie Zinntetrachlorid oder durch direkte Halogenierung mit Halogenierungsmitteln wie Thionylchlorid bei Temperaturen zwischen 40 bis 100° C, in das Molekül eingeführt, wobei die endständige(n) OH-Gruppe(n) ganz oder teilweise gegen Chloratome ausgetauscht werden. Die so erhaltenen chlorhaltigen Zwischenprodukte werden mit Natriumsulfit in einem Druckgefäß bei Temperaturen zwischen 100 und 200° C, vorzugsweise bei 140 bis 180° C umgesetzt.

Die erfindungsgemäßen Verbindungen und ihre Gemische sind in Wasser emulgierbar bis klar löslich und zeigen nach dem Ross-Miles-Test (DIN 53902) nur eine geringe Schaumneigung bei gleichzeitiger Herabsetzung der Oberflächenspannung nach der Ringabreißmethode (DIN 53914) bis zu optimal 45 $10^{-3}$N/m. Gleichzeitig netzen sie Baumwollgewebe nach der Tauchnetzmethode (DIN 53901) bei 70° innerhalb von Sekunden und sind in den alkalischen und sauren Anwendungsbereichen, wie sie für Tenside üblich sind, beständig.

Die erfindungsgemäßen Substanzen können aufgrund ihrer vielseitigen oberflächenaktiven Eigenschaften für ein breites Anwendungsspektrum verwendet werden. Dies gilt vor allem für den Einsatz als Kuppelhilfsmittel bei der Herstellung von. Azofarbmitteln, insbesondere von Azopigmenten, sowie als Dispergier- und Verteilungsmittel für die Feinverteilung und Stabilisierung von schwerlöslichen und unlöslichen Farbmitteln, vorzugsweise Dispersionsfarbstoffen, wie sie in Form von Farbstoffdispersionen bevorzugt zum Färben von natürlichem und synthetischem Fasermaterial, wie Baumwolle, Wolle, Cellulose, Zellwolle, Celluloseacetat, -triacetat, Polyester, Polyamid und Polyacrylnitril, oder von Fasermaterialien, die diese Stoffe enthalten, verwendet werden. Darüber hinaus sind die erfindungsgemäßen Substanzen für die Herstellung von wäßrigen fließfähigen Pigmentdispersionen, für die Formulierung von Pflanzenschutz- und Schädlingsbekämpfungsmitteln sowie als Egalisier- und Färbereihilfsmittel sehr gut geeignet. Dabei können die erfindungsgemäßen Verbindungen alle einzeln als Gemische oder in Kombinationen mit anderen nichtionogenen und/oder anionaktiven Tensidverbindungen, Gerüstsubstanzen und anderen Zusätzen oder Hilfsstoffen zur Anwendung kommen.

Die nachfolgenden Beispiele dienen zur näheren Erläuterung der Erfindung. Teile und Prozentangaben beziehen sich auf das Gewicht, Druckangaben sind "Überdruck", sofern nichts anderes angegeben ist.

**Beispiele**

In den folgenden Beispielen A - I wird die Herstellung der erfindungsgemäßen Verbindungen beschrieben.

**Verbindung A**

a) Herstellung eines 5-Kern-(methyl-β-naphthol)-novolaks

200 Tl. Methyl-β-naphthol werden bei 60° Innentemperatur geschmolzen und unter langsamem Rühren 33,8 Tl. Paraformaldehyd eingetragen. unter Überlagerung mit Stickstoff wird 30 Minuten bei 60° gerührt und nach Erhöhung der Innentemperatur auf 90° werden 2,5 Tl. konz. Salzsäure zugetropft. Danach wird 16 Stunden bei 110° unter gleichzeitigem Durchleiten von Stickstoff gerührt. Nach weiterer Steigerung der Innentemperatur auf 135 bis 140° wird innerhalb 2 Stunden das Reaktionswasser entfernt. Anschließend wird der Druck auf etwa 20 bis 30 mbar reduziert und 1 Stunde bei 135 bis 140° nachgerührt. Nach dem Erkalten erhält man ein rotbraunes, klares, sprödes Harz.

b) Herstellung des Novolak-Oxalkylates

200 Tl. des nach a) erhaltenen Novolaks werden nach Zugabe von 1,1 Tl. frisch pulverisiertem Ätznatron in einem Druckgefäß unter Rühren und Zuführung von 206 Tl. Ethylenoxid bei 150 bis 160° Innentemperatur unter Aufrechterhaltung eines Druckes von 2 bis 4 bar oxethyliert. Wenn das gesamte Ethylenoxid aufgedrückt ist, wird 1 Stunde bei 150 bis 160° nachgerührt. Das erhaltene zähflüssige Oxethylat enthält 50 Mol Ethylenoxid.

c) Herstellung eines Sulfobernsteinsäurehalbesters

300 Tl. des nach b) erhaltenen Oxethylats werden nach Zugabe von 105,6 bis 116,2 Tl. Maleinsäureanhydrid und 0,3 Tl. Ätznatron in 3 Stunden bei 70 bis 80° unter Überlagerung mit Stickstoff verestert. Anschließend werden nach Verdünnen mit Wasser 135,8 bis 149,4 Tl. Natriumsulfit als wäßrige Lösung bei 40 bis 80° innerhalb 15 bis 120 Minuten zugerührt. Sobald der Ansatz klar geworden ist, wird noch 1 Stunde nachgerührt. Die Menge des zugesetzten Wassers kann zwischen 50 und 85 % der Endlösung betragen.

**Verbindung B**

a) Herstellung eines 5-Kern-(methyl-β-naphthol)-novolaks

150 Tl. Methyl-β-naphthol werden gemäß Beispiel Aa) mit 54,3 Tl. Butyraldehyd versetzt und nach Zugabe von 3 Tl. konz. Salzsäure 15 Stunden bei 110°C Innentemperatur kondensiert.

b) Herstellung des Novolak-Oxethylates

160 Tl. des nach a) erhaltenen Novolaks werden entsprechend Verbindung Ab) nach Zugabe von 1,5 Tl. Natriummethylat in einem Druckgefäß bei 150 bis 160°C Innentemperatur mit 650 Tl. Ethylenoxid umgesetzt. Das erhaltene zähflüssige Oxethylat enthält 80 Mol Ethylenoxid.

c) Herstellung eines Sulfobernsteinsäurehalbesters

200 Tl. des nach b) erhaltenen Oxethylats werden gemäß Verbindung Ac) mit 21,6 bis 23,76 Tl. Maleinsäureanhydrid und 27,8 bis 30,6 Tl. Natriumsulfit unter Zusatz von Wasser umgesetzt. Die Menge des zugesetzten Wassers kann zwischen 50 und 85 % der Endlösung betragen.

**Verbindung C**

a) Herstellung eines 3-Kern-(nonyl-β-naphthol)-novolaks

810 Tl. Nonyl-β-naphthol werden vorgelegt und bei Raumtemperatur unter langsamem Rühren 166 Tl. Paraformaldehyd eingetragen. Unter Überlagerung mit Stickstoff wird 1 Stunde bei 50°C gerührt und nach Erhöhung der Innentemperatur auf 90°C werden 9,0 Tl. konz. Salzsäure zugetropft. Danach wird 6 Stunden bei 110°C unter gleichzeitigem Durchleiten von Stickstoff gerührt und nach weiterer Steigerung der Innentemperatur auf 135 bis 140°C wird innerhalb 4 Stunden das Reaktionswasser entfernt. Dann wird der Druck auf etwa 20 bis 30 mbar reduziert und 2 Stunden bei 135 bis 140°C nachgerührt. Nach dem Erkalten erhält man ein dunkelrotbraunes klares festes Harz.

b) Herstellung des Novolak-Oxethylats

200 Tl. des nach a) erhaltenen Novolaks werden nach Zugabe von 1,1 Tl. frisch pulverisiertem ätznatron in einem Druckgefäß unter Rühren und Zuführung von 603 Tl. Ethylenoxid bei 160 bis 170°C unter Aufrechterhaltung eines Druckes von 2 bis 4 bar oxethyliert. Wenn das gesamte Ethylenoxid aufgedrückt ist, wird 1 Stunde bei 160 bis 170°C nachgerührt. Das erhaltene zähflüssige Oxethylat enthält 60 Mol Ethylenoxid.

c) Herstellung eines Sulfobernsteinsäurehalbesters

300 Tl. des nach b) erhaltenen Oxethylats werden nach Zugabe von 25,2 bis 27,7 Tl. Maleinsäureanhydrid und 0,3 Tl. ätznatron in 3 Stunden bei 70 bis 80°C unter Überlagerung mit Stickstoff verestert. Anschließend werden nach Verdünnen mit Wasser 32,2 bis 35,4 Tl. Natriumsulfit als wäßrige Lösung bei 40 bis 80°C innerhalb 15 bis 120 Minuten zugerührt. Wenn der Ansatz klar wasserlöslich geworden ist, wird noch 1 Stunde nachgerührt. Die Menge des zugesetzten Wassers kann zwischen 50 und 85 % der Endlösung betragen.

**Verbindung D**

a) Herstellung eines 5-Kern-(nonyl-β-naphthol)-novolaks

1350 Tl. Nonyl-β-naphthol werden vorgelegt und bei Raumtemperatur unter langsamem Rühren 132 Tl. Paraformaldehyd eingetragen. Unter Überlagerung mit Stickstoff wird 1 Stunde bei 50°C gerührt und nach Erhöhung der Innentemperatur auf 90°C werden 15,1 Tl. konz. Salzsäure zugetropft. Danach wird 10 Stunden bei 110°C bei gleichzeitigem Durchleiten von Stickstoff gerührt und nach Steigerung der Innentemperatur auf 135 bis 140°C wird innerhalb von 4 Stunden das Reaktionswasser entfernt. Dann wird der Druck auf etwa 20 bis 30 mbar reduziert und 2 Stunden bei 135 bis 140° nachgerührt. Nach dem Erkalten erhält man ein dunkles rotbraunes festes Harz.

b) Herstellung des Novolak-Oxethylates

200 Tl. des nach a) erhaltenen Novolaks werden nach Zugabe von 1,1 g frisch pulverisiertem ätznatron in einem Druckgefäß unter Rühren und Zuführung von 572 Tl. Ethylenoxid bei 160 bis 170°C unter Aufrechterhaltung eines Druckes von 2 bis 4 bar oxethyliert. Wenn das gesamte Ethylenoxid aufgedrückt ist, wird 1 Stunde bei 160 bis 170°C nachgerührt. Das erhaltene zähflüssige Oxethylat enthält 95 Mol Ethylenoxid.

c) Herstellung des Maleinsäurehalbesters

500 Tl. des nach b) erhaltenen Oxethylats werden nach Zugabe von 43,8 bis 48,2 Tl. Maleinsäureanhydrid und 0,5 Tl. Ätznatron 3 Stunden bei 70 bis 80° unter Überlagerung mit Stickstoff gerührt, anschließend mit Wasser verdünnt und mit Natronlauge neutral gestellt. Die Menge des zugesetzten Wassers kann zwischen 50 und 80 % der Endlösung betragen.

**Verbindung E**

Herstellung eines Phthalsäurehalbesters

500 Tl. Oxethylat Db) werden nach Zugabe von 66,2 bis 72,8 Teilen Phthalsäureanhydrid und 0,56 Tl. Ätznatron 4 Stunden bei 70 bis 80° unter Überlagerung mit Stickstoff gerührt, anschließend mit Wasser verdünnt und mit Natronlauge neutralisiert. Die Menge des zugesetzten Wassers kann zwischen 50 und 80 % der Endlösung betragen.

**Verbindung F**

Herstellung eines Phthalsäure-sulfobernsteinsäurehalbesters

500 Tl. Oxethylat Db) werden nach Zugabe von 26,4 bis 28,1 Tl. Phthalsäureanhydrid, 26,3 bis 29,9 Tl. Maleinsäureanhydrid und 0,5 Tl. Ätznatron 4 Stunden bei 70 bis 80° unter Überlagerung mit Stickstoff gerührt. Anschließend wird mit Wasser verdünnt und bei 40 bis 80° portionsweise mit 33,8 bis 37,2 Tl. Natriumsulfit versetzt, bis der Ansatz klar löslich geworden ist. Anschließend wird 1 Stunde nachgerührt und mit Natronlauge neutralisiert. Die Menge des zugesetzten Wassers kann zwischen 50 und 85 % der Endlösung betragen.

**Verbindung G**

Herstellung eines Sulfobernsteinsäurehalbesters

500 Tl. Oxethylat Db) werden nach Zugabe von 43,8 bis 48,2 Tl. Maleinsäureanhydrid und 0,5 Tl. Ätznatron analog Verbindung Ac verestert; anschließend - nach Verdünnen mit Wasser - werden 56,4 bis 62,0 Tl. Natriumsulfit (als wäßrige Lösung) bei 40 bis 80° innerhalb 15 bis 120 Minuten zugerührt, bis der Ansatz klar löslich geworden ist. Anschließend wird 1 Stunde nachgerührt. Die Menge des zugesetzten Wassers kann zwischen 50 bis 85 % der Endlösung betragen.

**Verbindung H**

Herstellung eines Natriumsulfonates

500 Tl. Oxethylat Db) werden nach Erwärmen auf 90° mit 25 Tl. Zinntetrachlorid versetzt. Anschließend werden 41,4 Tl. Epichlorhydrin innerhalb 30 bis 40 Minuten zugetropft. Bei 80° wird 2 Stunden nachgerührt. Nach Entfernen des Katalysators wird das Rohprodukt mit 56,4 Tl. Natriumsulfit innerhalb 4 Stunden bei 160° und 4 bis 6 bar in einem Autoklav umgesetzt. Nach Aufarbeiten und Trocknen im Vakuum bei 80° erhält man das Natriumsulfonat.

**Verbindung I**

a) Herstellung eines 7-Kern-(nonyl-β-naphthol)-novolaks

800 Tl. Nonyl-β-naphthol werden vorgelegt und bei Raumtemperatur unter langsamem Rühren 84 Tl. Paraformaldehyd eingetragen. Unter Überlagerung mit Stickstoff wird 1 Stunde bei 50° C gerührt und nach Erhöhung der Innentemperatur auf 90° C werden 9,3 Tl. konz. Salzsäure zugetropft. Danach kondensiert man gemäß Verbindung Ba) 15 Stunden bei 110° C unter Durchleiten von Stickstoff und rührt noch weitere 4 Stunden bei einer Innentemperatur von 135 bis 140° C, wobei das Reaktionswasser entfernt wird. Anschließend rührt man noch 2 Stunden bei 135 bis 140° C nach. Nach dem Erkalten erhält man ein dunkel-rotbraunes, klares sprödes Harz.

b) Herstellung des Novolak-Oxethylates

200 Tl. des nach a) erhaltenen Novolaks werden nach Zugabe von 1,1 Tl. frisch pulverisiertem Ätznatron gemäß Verbindung Bb) mit 625 Tl. Ethylenoxid umgesetzt. Das erhaltene zähflüssige Alkylenoxidaddukt enthält 140 Mol Ethylenoxid.

c) Herstellung eines Sulfobernsteinsäurehalbesters

500 Tl. des nach b) erhaltenen Oxethylats werden gemäß Verbindung G mit 41,6 bis 45,8 Tl. Maleinsäureanhydrid bei 70 bis 80° C und 53,4 bis 58,9 Tl. Natriumsulfit (als wäßrige Lösung) umgesetzt. Die Menge des zugesetzten Wassers kann zwischen 50 und 85 % der Endlösung betragen.

**Prüfbeispiele**

Für die Prüfung der Dispergiereigenschaften der erfindungsgemäßen Substanzen für die Feinverteilung und Stabilisierung von Dispersionsfarbstoffen wird nachstehendes Prüfverfahren benutzt:

Für vergleichende Mahlversuche werden entsprechend der DE-OS 21 32 403 ca. 10 g Farbstoff C.I. Disperse Red 65 mit der zu prüfenden Verbindung, Wasser und 50 g Sili-Quarzitperlen (1 mm Ø) mit einem 2-Scheibenrührer ähnlich den üblichen Rührern in Rührwerksmühlen in einem kleinen Zylinder mit einem Laborrührmotor unter Kühlung gemahlen. Der Fortschritt der Feinverteilung wird in regelmäßigen Abständen durch Auslauf-Filterproben mit mikroskopischer Untersuchung verfolgt und nach einer 5-Punkte-Skala (1 = sehr schlecht, 5 = sehr gut) beurteilt.

Die Lagerstabilität kann man nach Verdünnen der Proben auf die gewunschte Farbstoffkonzentration, Lagern der Proben bei 50° im Trockenschrank und Wiederholung der Auslaufproben nach z. B. 1, 3 und 6 Wochen Lagerung beurteilen, wobei die unten angeführte Zeitangabe einer guten Stabilität entspricht.

Als Maß für das Färbeverhalten bei 106° wurde ein Gemisch Polyester/Wolle und bei 130° Polyester nach bekannten Verfahren gefärbt.Das Ergebnis wird in der nachfolgenden Tabelle durch die Ziffern 1 bis 5 festgelegt.

Es bedeuten: 1 kein Färbeverhalten
2 schwach
3 brauchbar
4 gut
5 sehr gut

**Tabelle**

| Verbindung | Mahlzeit (h) | Dispersionsgüte | Stabilität (Wochen) | Färbung 106°C | Färbung 130°C |
|---|---|---|---|---|---|
| A | 3 | 5 | 5 | 5 | 5 |
| B | 3 | 5 | 5 | 5 | 5 |
| C | 4 | 4–5 | 4–5 | 5 | 5 |
| D | 4 | 5 | 4–5 | 5 | 5 |
| E | 3 | 5 | 5 | 5 | 5 |
| F | 6 | 4–5 | 4–5 | 5 | 5 |
| G | 3 | 5 | 4–5 | 5 | 5 |
| I | 3 | 5 | 5 | 5 | 5 |

Die Anwendung der erfindungsgemäßen Substanzen als Kuppelhilfsmittel für Azopigmente wird in den folgenden Beispielen erläutert, ohne auf diese beschränkt zu sein.

**Beispiel 1**

11 Tl. Dinitroanilin werden in bekannter Weise in einer Mischung aus Schwefelsäure und Salzsäure mit 10,4 Tl. 40%iger Natriumnitritlösung diazotiert.

Eine Lösung von 8,64 Tl. β-Naphthol in einer Mischung von 100 Tl. Wasser und 8 Tl. 33%iger Natronlauge wird gefällt, indem man sie zu einer Mischung von 300 Tl. Wasser und 10 Tl. 31%iger Salzsäure tropft. Die Kupplung zum C.I. Pigment Orange 5 erfolgt sodann in bekannter Weise durch Zulauf der geklärten Diazoniumsalzlösung zur Suspension des gefällten β-Naphthols. Anschließend wird das Pigment filtriert, mit Wasser gewaschen und schließlich getrocknet.

Die Pigmentqualität läßt sich beeinflussen, indem man bei der Fällung der Kupplungskomponente zur Lösung des β-Naphthols und/oder zur vorgelegten Salzsäure oberflächenaktive Mittel zugibt.

**Beispiel 1a**

Man kuppelt Pigment Orange 5 wie in Beispiel 1 beschrieben, wobei man aber vor dem Eintropfen der β-Naphthol-Lösung noch 1 Tl. der Verbindung G zur vorgelegten Mischung aus 300 Tl. Wasser und 10 Tl. 31%iger Salzsäure gibt. Das so erhaltene Pigment unterscheidet sich von dem unter Beispiel 1 beschriebenen durch deutlich gelbere Nuance und wesentlich höhere Farbstärke sowohl im Buch- und Offsetdruck als auch in wäßrigen Präparationen für Flexodruck oder Dispersionsfarben. Die Druckfarben und Präparationen zeichnen sich durch niedrige Viskosität aus.

Außerdem zeigt das so erhaltene Pigment im Buch- und Offsetdruck stärkeren Glanz und bessere Transparenz.

**Beispiel 2**

34,5 Tl. 4-Chlor-2-nitroanilin werden in verdünnter Salzsäure angerührt, dann mit 34,7 Tl. 40%iger Natriumnitritlösung in bekannter Weise diazotiert und anschließend gaklärt.

In ein Gemisch aus 800 Tl. Wasser, 4 Tl. Eisessig und 8,1 Teilen 33%iger Natronlauge werden 43,25 Tl. Acetessigsäure-2-chloranilid eingerührt. Die Kupplung zum C.1. Pigment Yellow 3 erfolgt dann bei 10 bis 20° C derart, daß die Diazoniumsalzlösung unter die Oberfläche der Kupplungskomponentensuspension zuläuft. Der pH-Wert der Kuppelbrühe wird dabei durch Zugabe von verdünnter Natronlauge bei 4 bis 4,5 gehalten. Anschließend wird das Pigment filtriert, mit Wasser gewaschen und schließlich getrocknet.

Die Qualität des Pigmentes läßt sich beeinflussen durch Zugabe der oberflächenaktiven Mittel zur Suspension der Kupplungskomponente.

**Beispiel 2a**

Man kuppelt Pigment Yellow 3 wie unter Beispiel 2 beschrieben, wobei aber zur Suspension des Acetessig-2-chloranilids 4 Tl. Verbindung G zugesetzt werden.

Das so erhaltene Pigment zeigt in einem langöligen Alkydharzlack wesentlich höhere Farbstärke, hohe Transparenz und einen grüneren und reineren Farbton als das nach Beispiel 2 hergestellte Pigment Yellow 3.

**Beispiel 3**

30,4 Tl. 3-Nitro-4-aminotoluol werden in verdünnter Salzsäure mit 35 Tl. 40%iger Natriumnitritlösung in bekannter Weise diazotiert und anschließend geklärt.

In eine Mischung aus 600 Tl. Wasser, 4 Tl. Eisessig und 8,1 Tl. 33%iger Natronlauge werden 36 Tl. Acetessiganilid eingerührt.

Die Kupplung zum C.I. Pigment Yellow 1 erfolgt dann bei 10 bis 20° derart, daß die Diazoniumsalzlösung unter die Oberfläche der Kupplungskomponentensuspension zuläuft. Der pH-Wert der Kuppelbrühe wird dabei durch Zugabe von ververdünnter Natronlauge bei 4,5 gehalten. Anschließend wird das Pigment filtriert, mit Wasser gewaschen und schließlich getrocknet.

Durch Zusatz oberflächenaktiver Mittel zur Suspension des Acetessiganilids läßt sich die Qualität des Pigmentes beeinflussen.

**Beispiel 3a**

Man kuppelt Pigment Yellow 1 wie in Beispiel 3 beschrieben, versetzt aber die Suspension des Acetessiganilids vor Beginn der Kupplung mit 3,5 Tl. Verbindung G. Das so erhaltene Pigment zeigt in einem langöligen Alkydharzlack deutlich höhere Transparenz als das nach Beispiel 3 hergestellte Pigment Yellow 1.

**Patentansprüche**

1. Verbindung der allgemeinen Formel I

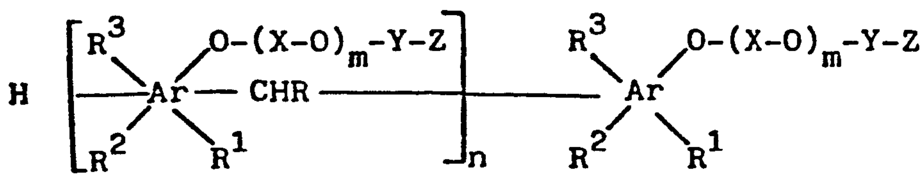

(I)

in der
Ar Naphthalin,
X $-CH_2-CH_2-$ und/oder $-CH_2-CH(CH_3)-$,
Y gleiche oder verschiedene Reste der Formeln $-CH_2-CH_2-$, $-CH_2-CH(CH_3)-$ und $-CH_2-CHOH-CH_2-$,
Z gleiche oder verschiedene Reste der Formeln -OH, $-O-CO-CH=CH-COOM$, $-O-CO-CH_2-CH(SO_3M)-COOM$

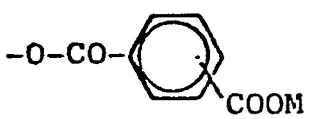

und $-SO_3M$,

wobei M für ein Kation steht, mit der Maßgabe, daß mindestens ein Rest Z von OH verschieden ist,
$R^1$, $R^2$ und $R^3$ Wasserstoff oder Alkyl mit 1 bis 14 C-Atomen, wobei mindestens einer der Reste $R^1$, $R^2$ und $R^3$ Alkyl sein muß,
R Wasserstoff oder Alkyl mit 1 bis 9 C-Atomen,
m eine Zahl von 1 bis 150 und
n eine Zahl von 1 bis 9 bedeuten.

2. Verbindungen nach Anspruch 1, in denen
X $-CH_2-CH_2-$,
Y $-CH^2-CH^2-$ oder $-CH^2-CHOH-CH^2-$,
Z $-O-CO-CH_2-CH(SO_3M)-COOM$,

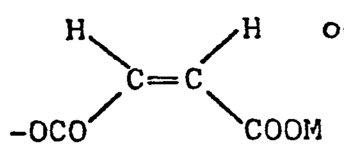

oder

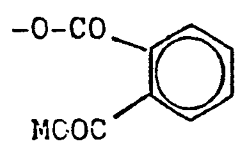

$R^1$ Alkyl mit 1 bis 12 C-Atomen,
$R^2$ und $R^3$ Wasserstoff.
R Wasserstoff oder Alkyl mit 1 bis 4 C-Atomen,
m eine Zahl von 2 bis 25,
n eine Zahl von 2 bis 6 und
M Wasserstoff, ein Alkalimetall, ein äquivalent Erdalkalimetall, oder eine Ammoniumgruppe, die durch niederes Alkyl substituiert sein kann, sowie eine aus Ammoniak oder solchen niederen Alkylaminen durch Anlagerung von bis zu 100 Ethylenoxid- und/ oder Propylenoxideinheiten erhaltene Ammoniumgruppe bedeuten.

3. Verbindungen nach Anspruch 2, in denen
Z $-O-CO-CH_2-CH(SO_3Na)-COONa$,
$R^1$ Methyl oder Alkyl mit 6 bis 12 C-Atomen,
R Wasserstoff und
m eine Zahl von 8 bis 20 bedeuten.

4. Verwendung der Verbindungen nach Anspruch 1 als grenzflächenaktive Mittel.

5. Verwendung der Verbindungen nach Anspruch 1 als Kuppelhilfsmittel für die Herstellung von Azopigmenten.

6. Verwendung der Verbindungen nach Anspruch 1 als Dispergiermittel bei der Herstellung von

Farbmitteldispersionen.

7. Verwendung der Verbindungen nach Anspruch 1 als Netz-, Emulgier-, Egalisier- und Färbereihilfsmittel,

8. Verfahren zur Herstellung der Verbindungen nach Anspruch 1, dadurch gekennzeichnet, daß man eine Verbindung der Formel

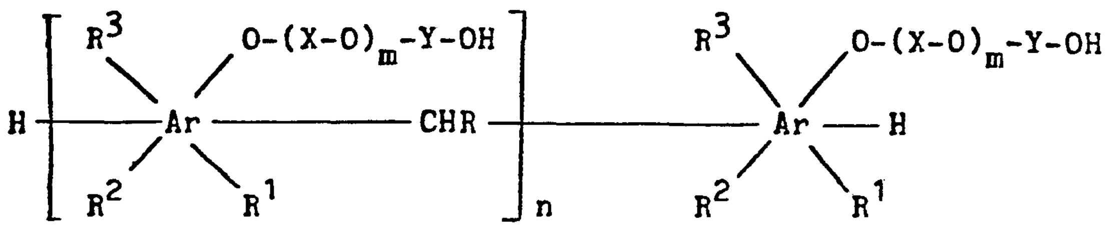

in der Ar, X, Y, R, $R^1$, $R^2$, $R^3$, m umd n die in Anspruch 1 genannte Bedeutung haben, mit 1 bis (n + 1) Mol einer Dicarbonsäure der Formel

H-O-CO-CH=CH-COOH oder 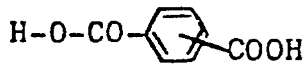

oder ihrem Anhydrid, bei 20 bis 100° C umsetzt.

9. Verfahren nach Anspruch 8, dadurch gekennzeichnet, daß am Umsetzungsprodukte mit einer Dicarbonsäure der Formel

H-O-CO-CH=CH-COOH

oder ihrem Anhydrid bei 20 bis 100° C Salze der schwefligem Säure angelagert werden.

10.Verfahren zur Herstellung der Verbindungen nach Anspruch 1, dadurch gekenmzeichnet, daß man eine Verbindung der Formel

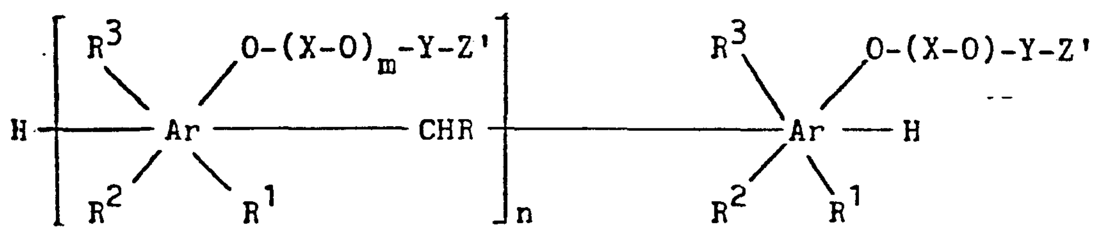

der Ar, X, Y, $R^1$, $R^2$, $R^3$, m und n die in Anspruch 1 genannte Bedeutung haben und Z' OH oder Cl bedeutet mit der Maßgabe, daß mindestens ein Rest Z' von OH verschieden ist, mit einem Sulfit bei Temperaturen von 100 bis 200° C umsetzt.

## Claims

1. A compound of the general formula I

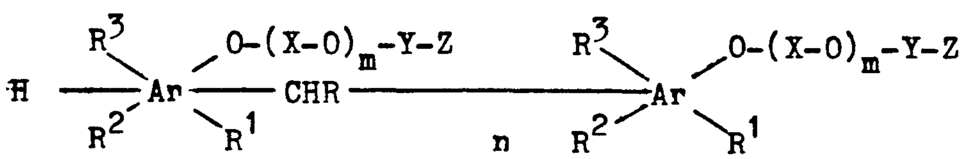

(I)

in which

Ar denotes naphthalene,

X denotes $-CH_2-CH_2-$and/or $-CH_2-CH(CH_3)-$,

Y denotes identical or different radicals of the formulae $-CH_2-CH_2-$,$-CH_2-CH(CH_3)-$ and $-CH_2-CHOH-CH_2$,

Z denotes identical or different radicals of the formulae -OH, -O-CO-CH=CH-COOM, $-O-CO-CH_2-CH(SO_3M)-$COOM,

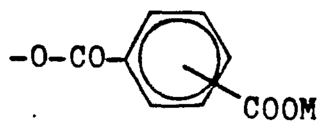

and

and

$-SO_3M$, in which M represents a cation, with the proviso that at least one radical Z is different from OH,

$R^1$, $R^2$ and $R^3$ denote hydrogen or alkyl having 1 to 14 C atoms, provided that at least one of the radicals $R^1$, $R^2$ and $R^3$ is alkyl,

R denotes hydrogen or alkyl having 1 to 9 atoms,

m denotes a number from 1 to 150 and

n denotes a number from 1 to 9.

2. A compound as claimed in claim 1, in which

X denotes $-CH_2-CH_2-$,

Y denotes $-CH_2-CH_2-$ or $-CH_2-CHOH-CH_2-$,

Z denotes $-O-CO-CH_2-CH(SO_3M)-COOM$,

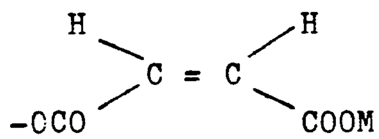

or

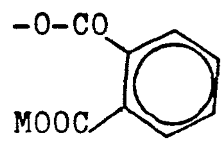

$R^1$ denotes alkyl having 1 to 12 C atoms,

$R^2$ and $R^3$ denote hydrogen,

R denotes hydrogen or alkyl having 1 to 3 C atoms,

m denotes a number from 2 to 25,

n denote a number from 2 to 6, and

M denotes hydrogen, an alkali metal, one equivalent of an alkaline earth metal, or an ammonium group which can be substituted by lower alkyl, or an ammonium group obtained from ammonia or such lower alkylamines by addition of up to 100 ethylene oxide and/or propylene oxide units.

3. A compound as claimed in claim 2, in which Z denotes $-O-CO-CH_2-CH(SO_3Na)-COONa$,

$R^1$ denotes nethyl or alkyl having 6 to 12 C atoms,

R denotes hydrogen, and

m denotes a number from 8 to 20.

4. The use of a compound as claimed in claim 1 as a surface-active agent.

5. The use of a compound as claimed in claim 1 as a coupling auxiliary in the preparation of azo pigments.

6. The use of a compound as claimed in claim 1 as a dispersing agent in the preparation of colorant dispersations.

7. The use of a compound as claimed in claim 1 as a wetting, emulsifying, leveling or dyeing auxiliary.

8. A process for the preparation of a compound as claimed in claim 1, characterized by reacting a compound of the formula

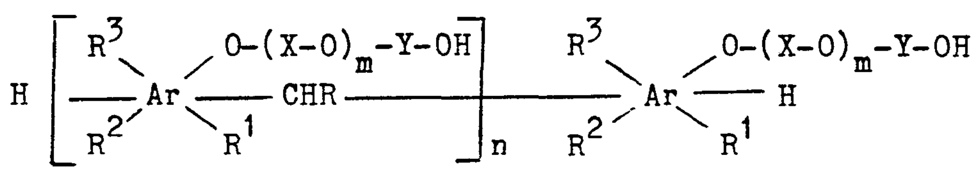

in which Ar, X, Y, R, $R^1$, $R^2$, $R^3$, m, and n have the meaning mentioned in claim 1, with 1 to (n+1) moles of a dicarboxylic acid of the formula

$H-O-CO-CH=CH-COOH$ or 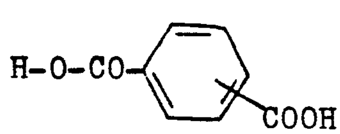

or its anhydride at 20 to 100 ° C.

9. The process as claimed in claim 8, characterized in that salts of sulfurous acid are added at 20 to 100 ° C to products of a reaction with a dicarboxylic acid of the formula

H-O-CO-CH=ch-COOH
or with its anhydride.

10. A process for the preparation of a compound as claimed in claim 1, characterized by reacting a compound of the formula

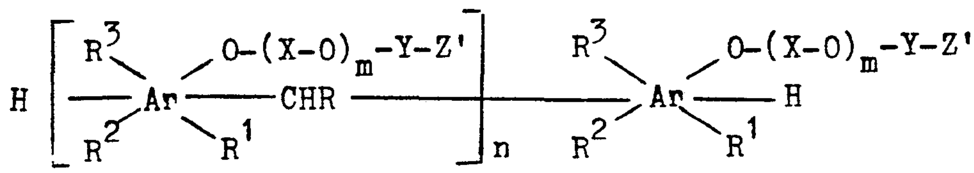

in which Ar, X, Y, $R^1$, $R^2$, $R^3$, m, and n have the meaning mentioned in claim 1 and Z' denotes OH or Cl with the proviso that at least one radical Z' is different from OH, with a sulfite at temperatures of 100 to 200 ° C.

## Revendications

1. Composés répondant à la formule générale I:

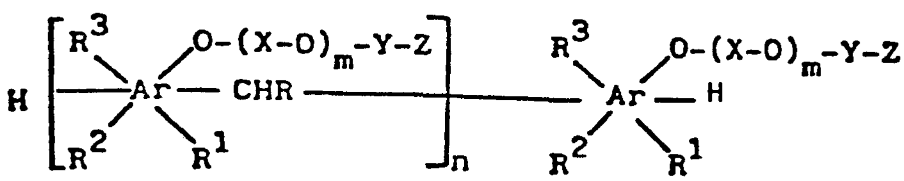

(I)

dans laquelle
Ar représente le radical du naphtalène,
X représente $-CH_2-CH_2-$ et/ou $-CH_2-CH(CH_3)-$, les Y représentent chacun, indépendamment les uns des autres, un radical $-CH_2-CH_2-$,$-CH_2-CH(CH_3)-$ ou $-CH_2-CHOH-CH_2-$,
les Z représentent chacun, indépendamment les uns des autres, un radical répondant à l'une des formules -OH, -O-CO-CH=CH-COOM, $-O-CO-CH_2-CH(SO_3M)-COOM$,

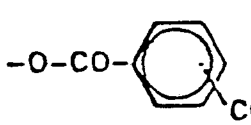

et $-SO_3M$

dans lesquelles M représente un cation, avec la condition qu'au moins un des symboles Z ne représente pas -OH,
$R^1$, $R^2$ et $R^3$ représentent chacun l'hydrogène ou un alkyle contenant de 1 à 14 atomes de carbone, au moins un de ces symboles devant représenter un alkyle,
R représente l'hydrogène ou un alkyle contenant de 1 à 9 atomes de carbone,
m représente un nombre de 1 à 150 et
n représente un nombre de 1 à 9.

2. Composés selon la revendication 1 dans lesquels:
X représente $-CH_2-CH_2-$,
Y représente $-CH_2-CH_2-$ ou $-CH_2-CHOH-CH_2-$,
Z représente un radical $-O-CO-CH_2-CH(SO_3M)-COOM$,

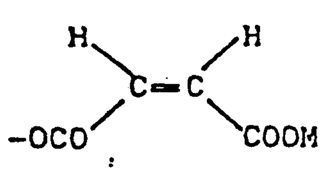

ou

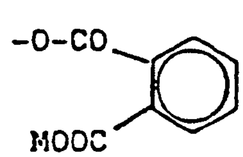

$R^1$ représente un alkyle contenant de 1 à 12 atomes de carbone,
$R^2$ et $R^3$ représentent chacun l'hydrogène,

R représente l'hydrogène ou un alkyle contenant de 1 à 4 atomes de carbone,
m représente un nombre de 2 à 25,
n représente un nombre de 2 à 6 et
M représente l'hydrogène, un métal alcalin, un équivalent d'un métal alcalino-terreux ou un radical ammonium, éventuellement porteur d'un alkyle inférieur, ou encore représente un radical ammonium obtenu à partir de l'ammoniac ou d'une alkylamine inférieure de ce genre par fixation d'au plus 100 motifs d'oxyde d'éthylène et/ou d'oxyde de propylène.

3. Composés selon la revendication 2 dans lesquels.
Z représente un radical -O-CO-$CH_2$-CH($SO_3$Na)-COONa,
$R^1$ représente un radical méthyle ou un radical alkyle contenant de 6 à 12 atomes de carbone,
R représente l'hydrogène et
m représente un nombre de 8 à 20.

4. Application des composés selon la revendication 1 comme surfactifs.

5. Application des composés selon la revendication 1 comme adjuvants de copulation pour la preparation de pigments azoïques.

6. Application des composés selon la revendication 1 comme dispersants dans la préparation de dispersions de colorants.

7. Application des composés selon la revendication 1 comme mouillants, émulsionnants, agents d'unisson et adjuvants de teinturerie.

8. Procédé de préparation des composés selon la revendication 1, procédé caractérisé en ce qu'on fait réagir, à une température comprise entre 20 et 100° C, un composé répondant à la formule suivante:

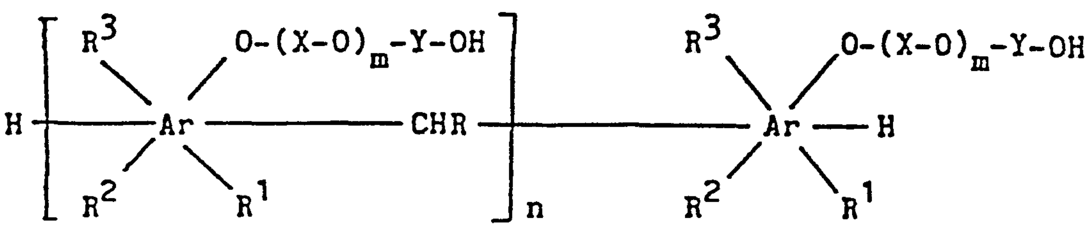

dans laquelle Ar, X, Y, R, $R^1$, $R^2$, $R^3$, m et n ont les significations données à la revendication 1, avec de 1 à (n+1) mol d'un acide dicarboxylique de formule:
H-O-CO-CH=CH-COOH ou H-O-CO

H-O-CO-CH=CH-COOH ou 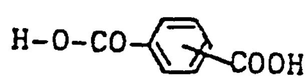

ou de son anhydride.

9. Procédé selon la revendication 8 caractérisé en ce qu'on fixe des sels de l'acide sulfureux, à une température de 20 à 100° C, sur les produits de réaction avec un acide dicarboxylique de formule:
HO-CO-CH=CH-COOH
ou son anhydride.

10. Procédé de préparation des composés selon la revendication 1, procédé caractérisé en ce qu'on fait réagir un composé répondant à la formule suivante:

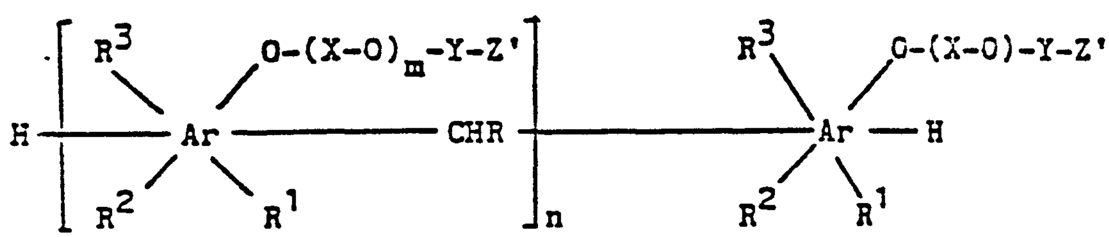

dans laquelle Ar, X, Y, $R^1$, $R^2$, $R^3$, m et n ont les significations indiquées dans la revendication 1 et Z' représente OH ou Cl avec la condition qu'au moins un des radicaux Z' ne signifie pas OH, à des températures entre 100 et 200 °C avec une sulfure.